# EUROPEAN PATENT APPLICATION

(11) **EP 1 026 483 A1**
(43) Date of publication of application: **09.08.2000**
(21) Application number: 00500016.1
(22) Date of filing: 08.02.2000
(51) Int. Cl.: G01G 3/14, G01G 23/00, G01L 1/22

(54) **Hysteresis compensated load cell**

(30) Priority: 08.02.1999 ES 9900257
(71) Applicant: Dinacell Electronica S.L., 28043 Madrid (ES)
(72) Inventor: Gonzalez Gallegos, Rafael, 28043 Madrid (ES)
(74) Representative: Carpintero Lopez, Francisco

(57) **Abstract**

A bending-mode load cell is presented for measuring weights of high order, which has been improved in order to minimise the errors in measurement resulting from the hysteresis of the material, which is accentuated through the contact of the cell with its bearing elements. The perfection consists in disposing the point of contact between cell and bearing points, precisely in the central plane of the cell where it is known that the deformation experienced by the material is minimum. With the present invention a load cell is obtained capable of making measurements with greater accuracy and with linear tolerance levels for whatever the range of weights being measured.

## Description

### OBJECT OF THE INVENTION

The present invention comprises a load cell for high order weight measurement, specifically of the type of cells which work by bending, in which improvements have been introduced intended to eliminate the measurement errors traditionally encountered in these cells as a result of the hysteresis in the materials.

Consequently with this invention a load cell is obtained which permits more precise measurement of the weight it supports, and with a linear margin of error for successive weight readings.

### BACKGROUND TO THE INVENTION

Load cells for measuring high weights are well known, and traditionally comprise a low-profile rectangular prismatic body which is subjected to a force produced by the weight to be measured, said weight producing an elastic deformation proportional to its magnitude in the load cell.

At a determined point of the cell body, a strain gauge is fastened, the latter consisting of a device sensitive to deformation in the material to which it is stuck, which varies its electrical resistance as a function of said deformation, whereby by determining the value of this resistance, generally by means of a Wheatstone Bridge arrangement and knowing the relationship between the resistance of the strain gauge and the deformation of the cell as a function of the weight it supports, the unknown value of the weight is found.

There exists an extensive range of load cell types in terms of the specific application for which they are intended or for overcoming determined problems, adopting various geometrical forms and sizes as a function of the range of weights to be measured, and as a function of whether the cell has to work with tractive, bending or torsion forces, which shall produce the corresponding elastic deformation of the material.

In like manner, multiple dispositions are possible for the strain gauges on the load cell, or various cells can be installed with their corresponding gauges, for adapting suitably to determined applications, typical applications of these devices being their use in elevators or hoists, travelling cranes, weigh-bridges, etc. In this sense the utility models n°9402449 and n°9601927, in the name of this same applicant, offer a good illustrative example of the state of the art.

However, there still exists a handicap to be overcome in the load cells with respect to the accuracy of the reading, and which arises from the hysteresis in the materials which affects the subsequent elastic recovery of the cell, once relieved of the force to which it was subjected, this phenomenon being more accused in the areas on which the cell body rests.

The load cell subjected to deformation by the weight which it is bearing, once totally or partially relieved of this weight, starts to recover its original geometrical form through its property of elasticity, but however, due hysteresis in the materials, this recovery is not proportional to the magnitude of the weight removed, but follows instead the cycle determined by the hysteresis curve, so that a new increase in the weight to be measured does not imply a correct deformation of the cell, since the starting point is not that of the cell's original geometry.

In the case of load cells working in bending mode, these are disposed horizontally bearing the weight in the centre of their upper face, the lower face resting on support points centred longitudinally and displaced to the extremities of the cell.

The bearing elements are usually in the form of round-headed gudgeons or of metal balls, which are inserted in respective shallow blind holes with a spherically capped bottom, likewise practised at the extremities of the lower face, which serve to ensure and maintain good seating of the cell on the supporting bodies. The separation between these two points of support is a determining factor in the bending of the cell, together of course with the properties of the material itself.

The negative influence of hysteresis is accentuated in the areas where the cell rests on the nipples, since while these keep their position, that is the distance between them remains constant, the load cell on changing form, be this on increasing its bending when bearing a load or recovering its rectilinearity when relieved of it, experiences an expansion by widening through the extremities towards the sides, or in the opposite sense when contracting.

The stable position of the supporting nipples restricts the deformation of the body of the cell, which accentuates the inherent reluctance of the material to deform due to hysteresis.

Because of this phenomenon the load cells provide readings with a high margin of error, and the greater the weight being measured, the greater this margin becomes; that is, with the present technique there is no linearity in the tolerance of the measurements, said tolerance increasing as the heaviness of weights being measured rises.

### DESCRIPTION OF THE INVENTION

This invention presents a bending-mode load cell, which has been improved in order to remove the negative influence which the contact between the supports and the cell body has in the accuracy of the reading, by accentuating the effect of hysteresis in the material.

Thus, the perfecting consists in displacing the point of contact between the body of the cell and the supports, to the central horizontal plane of the cell where it is known that there is neither elongation nor compression of the cell, achieving in this manner that there is no relative displacement between the cell and the supports, whereby the body of the cell is free to bend and recover independently of any influence.

Consequently a load cell is obtained capable of making measurements with greater precision, and with linear tolerance margins for whatever the range of weights being worked with.

### DESCRIPTION OF THE DRAWINGS

To complement the description being made and with the object of assisting in a better understanding of the features of the invention, a drawing is attached to this description, said drawing forming an integral part thereof, in which in an illustrative and not restrictive manner, the following is shown:

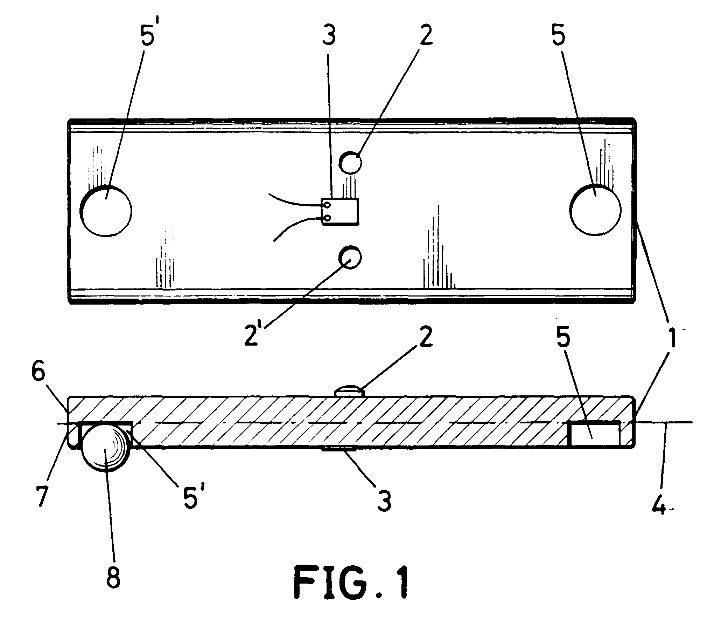

Figure 1.- Shows a drawing of a front elevation of the load cell being sectioned on a longitudinal plane in the centre, in which the dimensions have been blown up to appreciate more clearly the features of the invention. In the upper part of this figure a bottom plan view of this same piece is shown.

### PREFERRED EMBODIMENT OF THE INVENTION

In the attached figure 1 a load cell working in bending mode is shown, said cell conventionally having the form of a rectangular prism.

On the upper face of the cell two nipples (2) and (2') are positioned, aligned transversally in the centre of the cell, which constitute the points of support for the body to be weighed, with the intention of ensuring that the force which this weight entails, is transmitted exactly on the central and transversal axis of the cell. The disposition of these nipples (2,2') is optional, since they can be equally incorporated on the underside of the body being measured, suitably positioned to ensure they rest in the centre of the cell.

In this practical embodiment of the invention, a single strain gauge (3) is employed, positioned in the centre of the lower face of the load cell, since it is at that point where greatest bending is produced and consequently where greatest measuring sensitivity is achieved, although the disposition of the gauge (3) is not related with the properties of the invention.

In figure 1 is shown how the central horizontal plane (4) of the load cell, creates in the body of the load cell, an upper half (6) independent of the lower half (7). When the cell bends in accordance with the force to which it is subjected, the length of the upper half (6) is shortened and the length of the lower half (7) is extended, however it is known that in its central plane (4) there is no change in length.

Thus, the invention consists in implementing in the lower face of the load cell, blind holes (5) and (5') the bottom of which is flat and coplanar with the central horizontal plane of the body of the cell, that is, the depth of the blind holes (5), (5') is exactly half the thickness of the load cell.

The bearing elements for the load cell can be comprised of spherical balls (8) or of round-headed gudgeons, which in any case shall make contact with the bottom of the holes (5,5'), which is flat in order to achieve that the relative movement of the cell with respect to the bearing elements, is not a sliding motion as in the case of the conventional spherically capped bottoms, but instead a rotational motion, further favouring the free deformation of the cell.

Likewise, with the flat bottom of the blind holes (5,5'), it is procured that the contact surface between cell and bearing elements is greatly reduced, resulting in practically negligible friction.

With this technique the point of contact of the cell with the bearing elements is displaced to its central plane where it is neither shortened nor extended, so that the resistance which, with the earlier technique, the bearing elements presented to the deformation of the cell increasing the reluctance to elastic deformation of the material, is practically entirely removed.

## Claims

1. Improved bending-mode load cell, for measuring high order weights, comprising a body generically in rectangular prismatic form, which with the objective of eliminating the resistance which the bearing elements of the cell offer to its deformation increasing thereby the negative effect of hysteresis, is characterised in that the load cell has on its lower face at least two flat-bottomed blind holes in which the bearing elements are seated, the depth of which is precisely one half the thickness of the body of the load cell.
